# EUROPÄISCHE PATENTSCHRIFT

(11) **EP 0 557 548 B1**
(45) Veröffentlichungstag und Bekanntmachung des Hinweises auf die Patenterteilung: **05.10.1994**
(21) Anmeldenummer: 92103226.4
(22) Anmeldetag: 26.02.1992
(51) Int. Cl.: F16F 9/32

(54) **Mehrteiliger Stossdämpferkolben mit Fügeelementen**
Multi-piece damper piston with fitting element
Piston d'amortisseur multi-pièce par ajustage

(43) Veröffentlichungstag der Anmeldung: 01.09.1993
(73) Patentinhaber: Ringsdorff Sinter GmbH, 53177 Bonn (DE)
(72) Erfinder: May, Ewald, Dipl.-Ing., W-5300 Bonn 2 (DE)

(56) Entgegenhaltungen:
- EP-A- 0 275 368
- DE-U- 9 103 740

## Beschreibung

Die Erfindung betrifft einen aus mindestens zwei in erster Näherung scheibenförmigen Teilen ausschließlich durch Fügen und Zusammenpressen der gefügten Teile hergestellten, auf eine Kolbenstange montierbaren, eine Ober- und eine Unterseite sowie einen Kolbenmantel aufweisenden Stoßdämpferkolben, der als Funktionselemente im wesentlichen zwei Gruppen von durch Zwischenwände getrennte, gegensinnig durchströmbare Flüssigkeitsdurchtrittskanäle hat und auf seiner Ober- und auf seiner Unterseite im Abstand vom Ort der Kolbenstange je eine umlaufende Ringschulter aufweist, die eine Ringkammer, deren, in radialer Richtung gesehen innere Begrenzung mit der äußeren Begrenzung der zentralen, achsialen Bohrung für die Aufnahme der Kolbenstange zusammenfällt, einschließt und bei dem in zwei der Teile vor dem Fügen und Zusammenpressen die diesen Teilen zuzuordnenden Bereiche der Flüssigkeitsdurchtrittskanäle, deren Ein- bzw. Austrittsöffnungen, die Ringschulter und die Ringkammer vorgebildet waren.

Aufbau und die Funktionsweise von Stoßdämpfern und Stoßdämpferkolben im allgemeinen werden hier nicht beschrieben, da sie dem Fachmann bekannt sind. Sie können auch aus der einschlägigen Fachliteratur, z.B. aus Jörnsen Reimtell/Helmut Stoll, "Fahrwerktechnik: Stoß- und Schwingungsdämpfer" Vogel Buchverlag Würzburg, 1989, entnommen werden.

Stoßdämpferkolben der angegebenen Gattung werden heute in vielen Fällen hergestellt, indem zwei komplementäre scheibenförmige Teile und eine die mittlere Bohrung für die Aufnahme der Kolbenstange enthaltende Buchse oder Hülse zusammengesetzt und dann durch Zusammenpressen fest miteinander verbunden werden (EP-OS 0 275 368). An die Ausgangsteile und das daraus hergestellte Fertigprodukt werden hohe Genauigkeitsanforderungen gestellt. Besondere Beachtung findet hier das Maßverhältnis der Auflage der Ventilfederscheiben, die sich kreisringförmig um die Kolbenstange erstreckt, zur Höhe der die Ringkammer radial nach außen begrenzenden Ringschulter. Im betriebsfertigen Zustand decken die Ventilfederscheiben die Ringkammern, in denen sich die Austrittsöffnungen der Flüssigkeitsdurchtrittskanäle befinden, ab und liegen mit einer genau vorgegebenen Auflagekraft auf den Ringschultern auf. Diese Auflagekraft ergibt sich unter anderem bei der Montage der Teile aus den vorgenannten und für jede Stoßdämpfersorte vorbestimmten Maßverhältnissen. Bei unzulässig großen Abweichungen dieses Maßverhältnisses reagieren die Ventilfederscheiben nicht mehr präzise auf die konstruktionsseitig berücksichtigten Flüssigkeitsdrücke in der Ringkammer und der Stoßdämpfer erfüllt seine Funktion, gemessen an den konstruktiv vorgegebenen Dämpfungswerten nur mehr in ungenügendem Maße. Dies ist für ein Sicherheitselement wie einen Stoßdämpfer nicht hinnehmbar. Die Auflageflächen für die Ventilfederscheiben liegen kreisringförmig um die Kolbenstange im Bereich der eingepreßten Hülse. Es kommt folglich bei der Herstellung darauf an, die Hülsenenden, bezogen auf die Höhe der Ringschultern, stets genau an der gleichen Stelle zu plazieren, wobei es am günstigsten ist, wenn die Hülsenenden plan sind und mit dem Ringkammerboden praktisch übergangslos eine ebene Fläche bilden. Dies immer zu erreichen, ist bei dem vorgenannten Fertigungsverfahren schwierig und die Zurückweisungsrate wegen Toleranzüberschreitung ist deshalb besonders beim heute allgemein üblichen Verpressen von Sintermetallteilen zu Stoßdämpferkolben relativ hoch. Dies liegt daran, daß die Hülse erst beim Einpressen in die ihr zugedachte Öffnung ihre endgültige Gestalt erhält. Um sie gut in diese Bohrung des Stoßdämpferkolbenrohlings einführen zu können, hat sie im Ausgangszustand einen etwas kleineren Außendurchmesser als es der sie aufnehmenden Bohrung entspricht. Sie ist jedoch aus Gründen, die aus dem Folgenden klar werden, etwas länger als es ihrer Länge im fertigen Stoßdämpferkolben entspricht. Beim Verpressen der den Stoßdämpferkolben bildenden Teile wird die Hülse um etwa 10 % in ihrer Höhe verquetscht, um sie fest mit den sie umgebenden Teilen zu verbinden. Dabei lastet auf ihr ein um ein Vielfaches höherer Druck als es zum Verbinden der flachen, scheibenförmigen Teile notwendig ist. Nach der Druckentlastung federt die Hülse jedoch in nicht streng kontrollierbarem Maße zurück, so daß ihre Enden entweder ein wenig über die Ebene der Ringkammerböden hinausragen oder unter dieser zurückbleiben. Es kann auch ein Ende auf einer Seite hinausragen und das andere Ende auf der anderen Seite zurückspringen. Der an sich gewünschte Fall, daß die Enden auf beiden Seiten genau auf Höhe der Ringkammerböden liegen, ist, wie angegeben, selten. Die beschriebene Verfahrensweise führt bei den danach hergestellten Stoßdämpferkolben zu den im Vorstehenden bereits beschriebenen, für die Auflageflächen der Ventilfederscheiben und damit deren Auflagedruck auf den Ringschultern ungünstig großen Abweichungen, die ein unpräzises Ansprechen der Stoßdämpferkolben im Einsatz mit allen ungünstigen Wirkungen auf die gegen Stöße zu schützenden Elemente, wie Fahrzeug- oder Maschinenteile zur Folge haben. Die Anwendung eines geringeren Preßdruckes auf die Hülse, die eine geringere Rückfederung zur Folge hätte, führt hier nicht zum Ziel, da dadurch der sichere Sitz der Buchse im Stoßdämpferkolben nicht mehr gewährleistet wäre, was zur Funktionsuntüchtigkeit und/oder schweren Störungen im Betrieb führen würde.

Die Erfindung soll diesen Nachteilen abhelfen und hat zur Aufgabe, einen Stoßdämpferkolben zu schaffen, der aus vorgeformten Teilen allein durch Verpressen und ohne einen dem Preßvorgang nachgeschalteten materialabtragenden Bearbeitungsschritt hergestellt ist und der in dem der Hülse zugeordneten Bereich des Lagers für die Ventilfederscheiben keine unzulässigen Toleranzabweichungen hat. Insbesondere soll ein Stoßdämpferkolben der angegebenen Gattung geschaffen werden, bei dem die Lager für die Ventilfederscheiben genau in der Ebene der Ringkammerböden liegen.

Die Aufgabe wird durch die kennzeichnenden Merkmale der Ansprüche 1 und 7 gelöst. Die Unteransprüche geben Ausgestaltungen der Ansprüche 1 und 7 wieder.

Das gesetzte Ziel wird in allen Fällen dadurch erreicht, daß die ringkammerseitigen Endbereiche der Bohrung für die Aufnahme der Kolbenstange stets vom Material der scheibenförmigen Teile gebildet sind, die in einem vorgeschalteten Herstellungsschritt maßgetreu hergestellt worden sind. Bevorzugt geschieht dies nach pulver- oder sintermetallischen Verfahren. Eine als gesondertes Teil eingepreßte Hülse endet an diesen ringkammerseitigen Endbereichen der Bohrung nicht mehr. Auf den Endbereich der Bohrung folgen in Richtung des Inneren des Stoßdämpferkolbens Strukturen, die erhaben sein können oder aber Vertiefungen und Ausnehmungen bilden. Die diese Strukturen begrenzenden Flächen verlaufen, bezogen auf den Stoßdämpferkolben, im wesentlichen vertikal oder horizontal, wobei die horizontalen, d.h. die parallel zur Ober- und Unterseite des Stoßdämpferkolbens verlaufenden Flächen größere Abweichungen von der horizontalen Lage haben können. Auf die Abweichungen der Begrenzungsflächen von der Vertikalen wird später noch genauer eingegangen.

Wesentliches Merkmal dieser Strukturen ist es, daß die im oberen Flachteil und im unteren Flachteil des späteren Stoßdämpferkolbens befindlichen Strukturen so ausgebildet sind, daß beim Zusammensetzen der Teile die komplette Bohrung für die Aufnahme der Kolbenstange einschließlich des für ihre bestimmungsgemäße Verwendung notwendigen, sie umgebenden Materials entsteht. Dies kann durch Ineinandergreifen der Strukturen von zwei Flachteilen oder durch Kombination von zwei Flachteilen und einer Hülse geschehen. Die vertikal verlaufenden Begrenzungsflächen der die Bohrung bildenden Strukturen, die beim Fügen und Verpressen mit komplementären Gegenflächen des oder der anderen zu fügenden Teile verbunden werden sollen, sind etwas konisch in der Weise ausgeführt, daß beim Fügen die erhabenen oder die diesen wirkungsgleichen Strukturen leicht in die für sie bestimmten Versenkungen des anderen Teils oder der anderen Teile eingeführt werden können und diese Flächen beim Verpressen aneinander aufgleiten und schließlich einen unlösbaren, flüssigkeitsdichten Preßsitz ergeben. Zur Erzeugung eines fertigen Stoßdämpferkolbens sind bei dieser Verfahrensweise nur ca. 10 % der Preßkraft aufzuwenden, die beim Einpressen der Hülse nach dem Stand der Technik notwendig ist. Entsprechend ist das Rückfederungsverhalten des verpreßten Materials vernachlässigbar gering. Es wird praktisch keine Kraft zum Verformen von Teilen in vertikaler Richtung benötigt. Die aufgewendete Preßkraft wird über die Konen der zusammengehörenden Begrenzungsflächen im wesentlichen in radialer Richtung im Stoßdämpferkolben wirksam und reicht trotzdem aus, eine besser gefügte Verbindung herzustellen, als dies früher möglich war. Für das Funktionieren des erfindungsgemäßen Verfahrens muß bei der Auslegung der Teile konstruktiv vorgesehen werden, daß zwischen den sich nach dem Fügen gegenüberliegenden horizontalen Begrenzungsflächen der komplementären Strukturen ein geringer Spalt bleibt, damit an diesen Stellen beim Verpressen eine Materialkompression in vertikaler Richtung vermieden wird.

Nach diesem Verfahren können aus verschiedenen Materialien und auf unterschiedliche Weise hergestellte Formlinge zu einem Stoßdämpferkolben gefügt werden. Es können dies Metalle, Legierungen oder Kunststoffe sein, die durch Druckguß-, Feinguß-, pulvermetallurgische oder Sinterverfahren hergestellt worden sind.

Die Erfindung umfaßt eine große Anzahl technisch möglicher Strukturen an den zu fügenden Teilen. Für eine rationelle Fertigungstechnik werden jedoch die im Folgenden anhand von Zeichnungen beispielhaft beschriebenen Ausführungsformen bevorzugt.

Es zeigen:
- Fig. 1,: zwei zum Fügen vorbereitete Scheiben, entsprechend den Ansprüchen 2 und 3 im parallel zur Mittelachse der zentralen Bohrung geführten Vertikalschnitt.
- Fig. 2,: die zwei in Figur 1 wiedergegebenen Scheiben im gefügten und verpreßten Zustand.
- Fig. 3 und Fig. 4,: die Draufsichten in Richtung III-III bzw. IV-IV der Fig. 1 auf die beiden Innenseiten der zu fügenden scheibenförmigen Kolbenhälften, die sich nach dem Fügen mit Ausnahme der erfindungsgemäßen Erhebungen und Vertiefungen entlang der Äquatorebene des Stoßdämpferkolbens befinden.

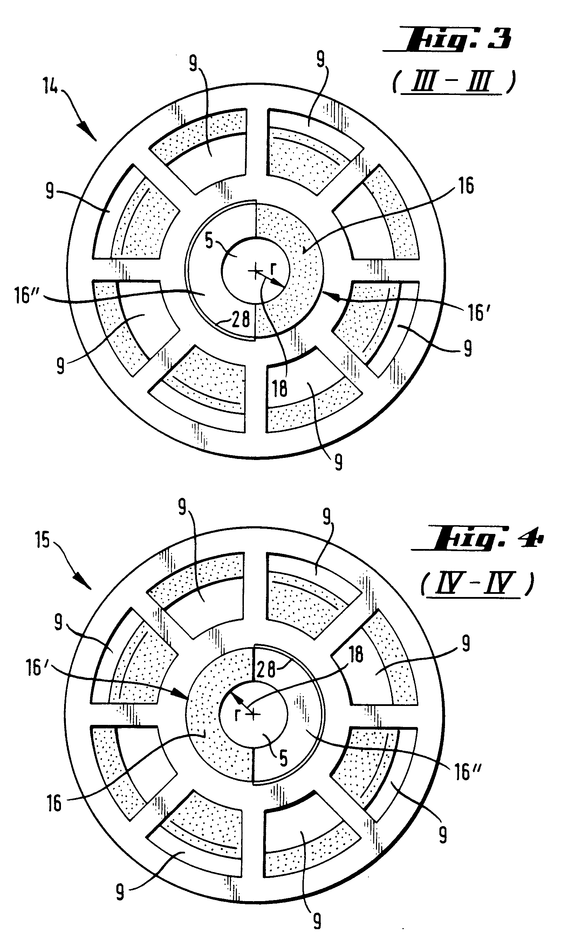

Die Figuren 2, 3 und 4 betreffen ebenfalls einen Stoßdämpferkolben gemäß den Ansprüchen 2 und 3.
- Fig. 5: zeigt die zwei zum Fügen vorbereiteten scheibenförmigen Kolbenhälften eines Stoßdämpferkolbens nach den Ansprüchen 4 und 5 im parallel zur Mittelachse der zentralen Bohrung geführten Vertikalschnitt.
- Fig. 6: veranschaulicht einen aus drei Teilen zusammengesetzten Stoßdämpferkolben gemäß Anspruch 7 im parallel zur Mittelachse der zentralen Bohrung geführten Vertikalschnitt.
- Fig. 7: stellt eine Draufsicht auf eine der beiden Innenseiten der zu fügenden scheibenförmigen Kolbenhälften mit einer achteckigen äußeren Begrenzung der nach dem Fügen und Verpressen die Bohrung für die Aufnahme der Kolbenstange bildenden Strukturen dar.

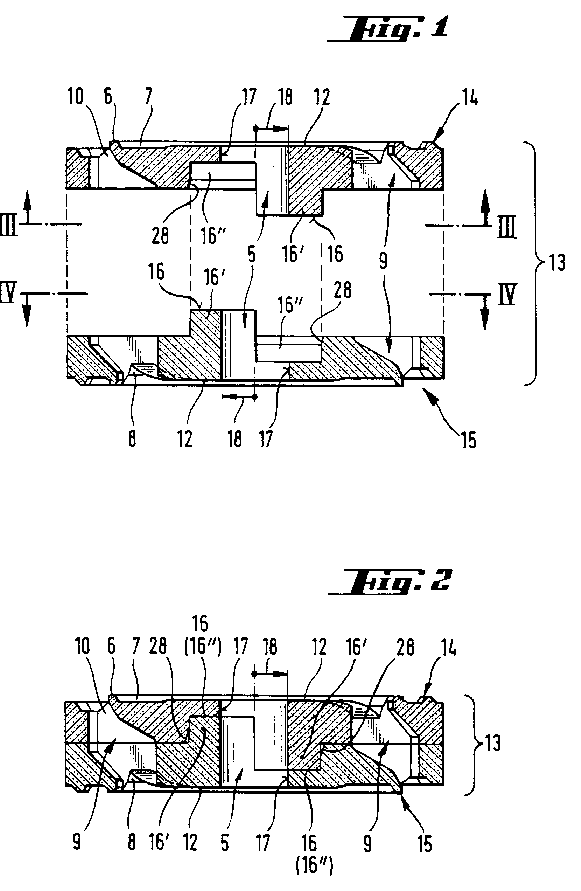

- Fig. 8: gibt zum Vergleich einen den Figuren 1, 2, 5 und 6 entsprechenden Querschnitt durch einen Stoßdämpferkolben nach dem Stand der Technik wieder.

Die Vorteile des erfindungsgemäßen Stoßdämpferkolbens sind klarer erkennbar, wenn den erfindungsgemäßen Lösungen die Beschreibung eines Stoßdämpferkolbens nach dem Stand der Technik wie er in Fig. 8 wiedergegeben ist, vorangestellt wird.

Der in Fig. 8 dargestellte Stoßdämpferkolben 1 besteht aus drei gefügten und durch Pressen miteinander verbundenen Teilen 2, 3, 4, einer oberen flachen, scheibenförmigen Kolbenhälfte 2, einer unteren flachen, scheibenförmigen Kolbenhälfte 3 und einer mittig plazierten Hülse 4, die die Bohrung 5 für die nicht dargestellte Kolbenstange trägt. Als weitere, für die Funktion wesentliche Bestandteile enthält der Stoßdämpferkolben 1 auf der Ober- und der Unterseite je eine umlaufende Ringschulter 6 und je eine von der Ringschulter 6 umschlossene Ringkammer 7, in die die Austrittsöffnungen 8 der Flüssigkeitsdurchtrittskanäle 9 münden. Die Eintrittsöffnungen 10 für die Flüssigkeitsdurchtrittskanäle 9 befinden sich dem Funktionsprinzip des Stoßdämpferkolbens 1 entsprechend außerhalb der Ringschultern 6. Die als Ganzes eingepreßte Mittelhülse 4 erstreckt sich, ausgehend von der Oberseite und an der Unterseite endend, durch den gesamten Stoßdämpferkolben 1. An den Stellen 11 kann sie über die Ebene 12 der Böden der beiden Ringkammern 7 hinausstehen oder hinter diese zurückfallen, was zu den vorbeschriebenen Problemen führt.

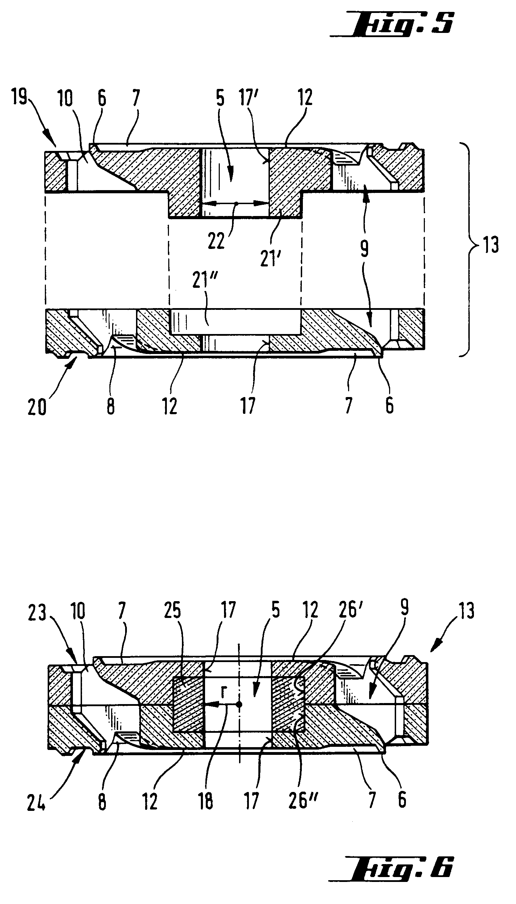

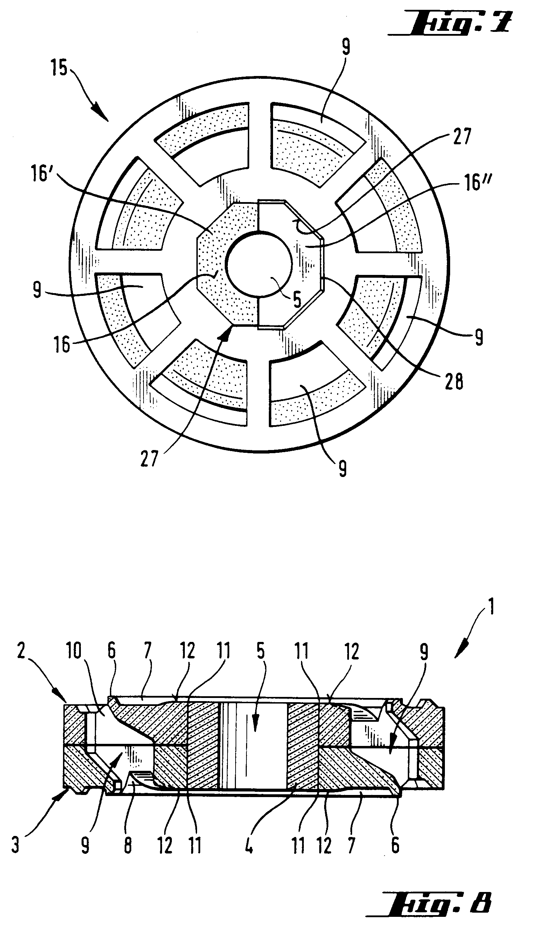

Die Figuren 1, 2, 3 und 4 stellen einen Stoßdämpferkolben 13 nach der bevorzugten Lösung der Erfindung oder Teile davon dar. Figur 1 gibt die vorgefertigte obere 14 und die vorgefertigte untere Kolbenhälfte 15 wieder, die beide gleich sind und aus denen durch Fügen (was durch Fasen 28 an den Rändern der Vertiefungen 16˝ erleichtert wird) und Verpressen der Stoßdämpferkolben 13 entsteht wie ihn Fig. 2 zeigt. Die Figuren 3 und 4 zeigen die nach dem Fügen der oberen 14 und der unteren Kolbenhälfte 15 sich in der Mitte des Stoßdämpferkolbens 13 gegenüberliegenden, zum Umkreis der zentralen Bohrung 5 gehörenden Flächen, die die Lage der komplementären Erhebungen 16′ und Vertiefungen 16˝ wiedergeben, in der Draufsicht. Diese Flächen sind in Fig. 1 und 2 unter der Bezeichnung 16 im Querschnitt erkennbar. Die außerdem sichbaren, nicht gekennzeichneten Flächen treten miteinander in Kontakt, stellen aber den Stand der Technik dar. Sie umschließen die Flüssigkeitsdurchtrittskanäle 9.

In den Fig. 1 und 2 sind die Bohrungen geringer Tiefe 17, die dem Durchmesser und der Lage der Bohrung 5 für die Aufnahme der Kolbenstange entsprechen, zu sehen. Daran nach innen anschließend befinden sich die die Erhebungen 16′ und die Vertiefungen 16˝ enthaltenden Strukturen, die, wie ergänzend aus den Figuren 3 und 4 hervorgeht, komplementär sind. Die Erhebungen 16′ haben die Form eines halben Hohlzylindermantels (Fig. 3, 4), dessen kleinere zylindrische Begrenzungsfläche entlang des Radius r 18 der die nicht dargestellte Kolbenstange aufnehmenden Bohrung 5 verläuft. Den Erhebungen 16′ gegenüber befinden sich den Erhebungen 16′ komplementäre Vertiefungen 16˝. Beim Fügen nehmen die Vertiefungen 16˝ die Erhebungen 16′ auf und es entsteht dabei zusammen mit den kurzen Bohrungen 17 die komplette Bohrung 5 für die nicht dargestellte Kolbenstange. Ein Überstehen oder Zurückfallen des Bohrungsrandes in bezug auf den Ringkammerboden 12 ist bei ordnungsgemäßer Fertigung hier nicht möglich.

Fig. 5 gibt eine erfindungsgemäße Lösung 13 mit zwei ungleichen Teilen 19, 20 wieder. Die obere Kolbenhälfte 19 weist eine Erhebung in Form eines Hohlzylindermantels 21′ auf, die in die Vertiefung 21˝ der unteren Kolbenhälfte 20 genau hineinpaßt. Der Innendurchmesser 22 des Zylindermantels 21′ sowie derjenige der an den Zylindermantel 21′ und die Vertiefung 21˝ anschließenden Bohrungen 17, 17′ von denen hier nur eine 17 eine geringe Tiefe hat, während die andere 17′ die Stärke der oberen Kolbenhälfte 19, ausgehend vom Ringkammerboden bis zur Äquatorlinie des späteren Stoßdämpferkolbens einnimmt, entspricht auch nach dem Fügen und Verpressen der Teile 19, 20 wiederum dem Außendurchmesser der nicht dargestellten Kolbenstange. Auch hier ist ein Überstehen oder Zurückfallen des Bohrungsrandes in bezug auf den Ringkammerboden 12 bei ordnungsgemäßer Fertigung nicht möglich.

Ein aus drei Teilen 23, 24, 25 gefügter Stoßdämpferkolben 13 ist in Figur 6 dargestellt. Auch hier ist das von der Aufgabe gesteckte Ziel, eine Auflage für die Ventilfederscheiben genau in Höhe der Ringkammerböden 12 zu schaffen, erreicht. Der Stoßdämpferkolben 13 besteht in diesem Falle aus einem oberen Flachteil 23 und einem unteren Flachteil 24, die untereinander gleich sind sowie einer Hülse oder Buchse 25. Die zwei Kolbenhälften 23, 24 haben, ausgehend von den die Ringkammern 7 tragenden Seiten eine achsiale, relativ niedrige Bohrung 17, deren Radius r 18 dem Radius der nicht dargestellten Kolbenstange entspricht. An diese Bohrungen 17 schließt sich in vertikaler Richtung nach Innen zu in jedem der zwei gleichen Teile eine in dieser Figur 6 von der Hülse 25 ausgefüllte Ausnehmung 26′, 26˝ an, die so ausgebildet ist, daß beim Zusammenfügen und Verpressen der beiden Teile 23, 24 und der Hülse 25 die Hülse 25 gerade in die Ausnehmungen 26′, 26˝ in der vorbeschriebenen Weise unter Ausbildung eines Preßsitzes hineinpaßt.

In allen zu fügenden Teilen kann die radial äußere Begrenzung der Erhebungen und Vertiefungen oder der Hülse rund sein oder aber die Form eines Polygons, vorzugsweise eines Sechs- oder Achtecks haben.

Figur 7 gibt in Abwandlung der Darstellung in Figur 3 eine solche Ausführung mit achteckiger Außenkontur 27 der Erhebungen 16′ und der komplementären Vertiefungen 16˝ am Beispiel der Innenansicht eines Flachteils oder einer Kolbenhälfte 15 wieder.

Wie im Vorstehenden gezeigt worden ist, haben erfindungsgemäße Stoßdämpferkolben Auflageflächen für die Ventilfederscheiben oder deren Unterstützungen, die frei von unzulässigen Toleranzabweichungen sind. Mit derartigen Stoßdämpferkolben sind Stoßdämpfer verfügbar, die eine hohe Betriebssicherheit und Ansprechgenauigkeit haben. Ein weiterer Vorteil ist die Möglichkeit, derartige Stoßdämpferkolben nach rationellen Verfahren aus maximal drei, in der bevorzugten Ausführungsform aus zwei gleichen, einfach und maßgenau vorfertigbaren Teilen herzustellen. Dies ermöglicht z.B. die Verwendung automatisierter Fertigungsverfahren zur Herstellung von Stoßdämpferkolben.

## Patentansprüche

1. Aus mindestens zwei in erster Näherung scheibenförmigen Teilen (2, 3) ausschließlich durch Fügen und Zusammenpressen der gefügten Teile hergestellter, auf eine Kolbenstange montierbarer, eine Ober- (2) und eine Unterseite (3) sowie einen Kolbenmantel aufweisender Stoßdämpferkolben, der als Funktionselemente im wesentlichen zwei Gruppen von durch Zwischenwände getrennte, gegensinnig durchströmbare Flüssigkeitsdurchtrittskanäle (9) hat und auf seiner Ober-(2) und auf seiner Unterseite (3) im Abstand vom Ort der Kolbenstange je eine umlaufende Ringschulter (6) aufweist, die eine Ringkammer (7), deren, in radialer Richtung gesehen, innere Begrenzung mit der äußeren Begrenzung der zentralen, achsialen Bohrung (5) für die Aufnahme der Kolbenstange zusammenfällt, einschließt
und bei dem in zwei der Teile (2, 3) vor dem Fügen und Zusammenpressen die diesen Teilen zuzuordnenden Bereiche der Flüssigkeitsdurchtrittskanäle (9), deren Ein- (10) bzw. Austrittsöffnungen (8), die Ringschulter (6) und die Ringkammer (7) bereits vorgebildet waren,
dadurch gekennzeichnet,
daß vor dem Fügen und Zusammenpressen
- in einem ersten Teil (14, 19, 23), das die obere Flachseite sowie in einem zweiten Teil (15, 20, 24), das die untere Flachseite des späteren Stoßdämpferkolbens (13) trägt der diesen Teilen, (z.B. 14, 15) zugehörende Bereich der Bohrung (5) für die Aufnahme der Kolbenstange in der Weise präformiert war, daß
- sich im ersten Teil (14, 19, 23) auf der Ringkammerseite eine Bohrung geringer Tiefe (17) vom Durchmesser und der Lage der Bohrung für die Aufnahme der Kolbenstange befand und sich im zweiten Teil (15, 20, 24) eine ebensolche Bohrung (17) oder eine Bohrung (17′) mit einer größeren Tiefe befand,
- die ringkammerseitigen Enden dieser Bohrungen mit den Ringkammerebenen (12) bündig waren,
- am ersten (14, 19, 23) und am zweiten Teil (15, 20, 24) auf der der jeweiligen Ringkammer (7) abgewandten Seite einander komplementäre Strukturen mit Erhebungen (16′ 21′), bzw. Vertiefungen (16˝, 21˝, 26′, 26˝), die an den Bereich der von den Ringkammerebenen (12) ausgehenden kurzen Bohrungen (17) direkt anschlossen, vorhanden waren,
und daß diese Erhebungen (16′ 21′) und Vertiefungen (16˝, 21˝, 26′, 26˝) so ausgebildet waren, daß aus ihnen beim Fügen und Zusammenpressen des ersten (14, 19, 23) und des zweiten Teils (15, 20, 24) durch Ineinandergreifen der innere Bereich der Bohrung für die Aufnahme der Kolbenstange des Stoßdämpferkolbens entstehen konnte und daß
- die sich annähernd vertikal erstreckenden, beim Fügen und Zusammenpressen in Kontakt tretenden Begrenzungsflächen der zusammengehörenden, ineinanderpassenden Körperstrukturen in der Weise konisch waren, daß sich beim Fügen unter Druck ein unlösbarer, flüssigkeitsdichter Preßsitz ergab.

2. Stoßdämpferkolben (13) nach Patentanspruch 1,
dadurch gekennzeichnet, daß
das erste (14) und das zweite Teil (15) gleich waren.

3. Stoßdämpferkolben (13) nach Patentanspruch 1 und 2,
dadurch gekennzeichnet, daß
die den inneren Bereich der Bohrung (5) beim Fügen ergebenden Strukturen in jedem der zwei gleichen Teile (14, 15) aus erstens einem durch einen gedachten Vertikalschnitt durch einen Zylindermantel entstandenen Halbzylindermantel (16′), der über die Äquatorebene des Stoßdämpferkolbens (13) heraussteht, dessen Höhe aber kleiner als das halbe Dickenmaß des Stoßdämpferkolbens (13) ist und dessen kleinere Mantelfläche entlang des Radius (18) der Bohrung (5) für die Aufnahme der Kolbenstange verläuft und dessen äußere Mantelfläche in einem solchen Abstand vor der Zone der Flüssigkeitsdurchtrittskanäle beider zu fügender Teile (14, 15) endet, daß diese eine genügende mechanische Stabilität aufweisen und zweitens aus einer um die mittlere Längsachse des Stoßdämpferkolbens angeordneten, durch Drehspiegelung des herausstehenden Teils (16′) des Halbzylindermantels an dem Äquator des Stoßdämpferkolbens als Spiegelebene und der mittleren Längsachse des Stoßdämpferkolbens als Drehachse mit einem Drehwinkel von 180 ° erzeugbaren, der Form des erhabenen Halbzylindermantels (16′) komplementären Vertiefung (16˝) bestanden haben.

4. Stoßdämpferkolben (13) nach Patentanspruch 1,
dadurch gekennzeichnet, daß
das erste (19) und das zweite Teil (20) ungleich waren.

5. Stoßdämpferkolben (13) nach Patentanspruch 1 und 4,
dadurch gekennzeichnet, daß
die den inneren Bereich der Bohrung (5) für die Aufnahme der Kolbenstange beim Fügen ergebende Struktur (21′) ein in dem ersten Teil (19) befindlicher, sich über die im gefügten Stoßdämpferkolben innenliegende, im wesentlichen flache Seite dieses ersten Teils (19) erhebender, im Abstand des halben Durchmessers (22) der Bohrung (5) für die Aufnahme der Kolbenstange um die vertikale Mittelachse umlaufender Zylindermantel (21′) war, dessen Höhe kleiner als das Dickenmaß des zweiten Teils (20) am Ort neben dessen im folgenden näher bezeichneten Eintiefung (21˝) war, und dessen äußere Mantelfläche in einem solchen Abstand von der Zone der Flüssigkeitsdurchtrittskanäle (9) im ersten (19) und im zweiten Teil (20) endete, daß diese eine genügende mechanische Stabilität aufweisen und daß sich in dem zweiten Teil (20) auf der im gefügten Stoßdämpferkolben (13) innen liegenden Seite eine Eintiefung (21˝) befand, die der zylindermantelförmigen Erhebung (21′) des ersten Teils (19) komplementär war.

6. Stoßdämpferkolben (13) nach Patentanspruch 1 bis 5,
dadurch gekennzeichnet, daß
die aus Erhebungen (16′, 21′) und Vertiefungen (16˝, 21˝) bestehenden komplementären Strukturen, die nach dem Fügen und Verpressen den inneren Bereich der Bohrung (5) für die Aufnahme der Kolbenstange ergaben, in der achsialen Draufsicht eine mehreckige, vorzugsweise sechs- oder achteckige äußere Begrenzung (27) hatten.

7. Stoßdämpferkolben (13) nach dem Oberbegriff des Patentanspruchs 1,
dadurch gekennzeichnet, daß
der Stoßdämpferkolben (13) aus zwei in erster Näherung scheibenförmigen Teilen (23, 24) und einer zylindermantelförmigen Hülse (25) gefügt ist, wobei die Hülse (25) den im Stoßdämpferkolben (13) innenliegenden Bereich (26′, 26˝) der für die Aufnahme der Kolbenstange bestimmten Bohrung (5) enthielt, der Innendurchmesser der Hülse (25) dem Durchmesser dieser Bohrung entsprach, der äußere Durchmesser der Hülse (25) so bemessen war, daß die äußere Mantelfläche der Hülse (25) im gefügten Stoßdämpferkolben (13) in einem solchen Abstand von der Zone der Flüssigkeitsdurchtrittskanäle (9) des ersten (23) und des zweiten Teils (24) endete, daß diese eine genügende Stabilität aufweisen und die Höhe der Hülse (25) kleiner als die Dicke des Stoßdämpferkolbens (13) am Ort der Ringkammerebenen (12) war,
daß jedes der zwei in erster Näherung scheibenförmigen Teile (23, 24) von seiner die Ringkammer tragenden Seite ausgehend eine achsiale Bohrung (17) für die Aufnahme der Kolbenstange in den Zonen hatte, in denen die Innenkontur der Hülse (25) nicht die Bohrung (5) für die Kolbenstange bildete und sich an diese achsiale Bohrung (17) eine Ausnehmung (26′, 26˝) anschloß, die so dimensioniert war, daß sie beim Fügen der drei Teile (23, 24, 25) die Hülse (25) gerade aufnehmen konnte
und daß die sich annähernd vertikal erstreckenden, beim Fügen miteinander in Kontakt tretenden Begrenzungsflächen der Hülse (25) und der die Hülse (25) aufnehmenden Ausnehmungen (26′, 26˝) in der Weise konisch waren, daß sich beim Fügen unter Druck ein unlösbarer, flüssigkeitsdichter Preßsitz ergab.

8. Stoßdämpferkolben (13) nach Patentanspruch 7,
dadurch gekennzeichnet, daß
die Hülse (25) in der achsialen Draufsicht eine mehreckige, vorzugsweise sechs- oder achteckige äußere Begrenzung (27) hatte und die die Hülse (25) aufnehmenden Ausnehmungen (26′, 26˝) eine der Form der Hülse (25) komplementäre Form hatten.

9. Stoßdämpferkolben (13) nach den Patentansprüchen 1 bis 8,
dadurch gekennzeichnet, daß
er aus Sintermetall besteht.

## Claims

1. A shock absorber piston having an upper side (2) and a lower side (3) as well as a piston skirt, the piston being produced from at least two parts (2,3) which are disc-shaped to a close approximation exclusively by joining and compressing the joined parts, said piston being capable of being assembled on a piston rod and having as function elements, essentially two groups of channels (9) for passage of fluid, the parts being separated by partition walls, and through which channels there can be flow in opposing directions, and which piston has on its upper side (2) and its lower side (3) respectively, spaced from the location of the piston rod, an encircling annular shoulder (6) which includes an annular chamber (7), the inner boundary of which chamber, when seen in the radial direction, coincides with the outer boundary of the central axial passage (5) which is for receiving the piston rod and in which piston before joining and compressing, there has already been preshaping in the two parts (2,3) of the regions of the channels (9) for passage of fluid assigned to these parts, the inlet openings (10) and the outlet openings (8) respectively thereof, the annular shoulder (6) and the annular chamber (7), characterised in that, before joining and compressing,
- in a first part (14,19,23) which has the upper flat side, as well as in a second part (15,20,24) which has the lower flat side of the later shock absorber piston (13), the region of the passage (5) for receiving the piston rod and which is associated with these parts (e.g. 14,15) was preformed in such a manner that
- there was located in the first part (14,19,23) on the annular chamber side a passage of shallow depth (17) having the passage diameter and the passage position for receiving the piston rod and there was located in the second part (15, 20, 24) such a passage (17) or a passage (17′) with a greater depth,
- the annular chamber ends of these passages were flush with the annular surfaces (12) of the chamber,
- structures were present at the first part (14,19,23) and the second part (15,20,24) on the side facing away from the respective annular chamber (7) which complemented each other and had projections (16′, 21′) and recesses (16˝, 21˝, 26′, 26˝) respectively, which adjoined directly the region of the short passages (17) extending from the annular surfaces of the chamber (12),
and in that these projections (16′, 21′) and recesses (16˝, 21˝, 26′, 26˝) were formed so that the inner region of the passage for receiving the piston rod of the shock absorber piston could be formed from said projections and recesses when the first part (14, 19, 23) and the second part (15, 20, 24) were joined and compressed and in that
- the boundary surfaces of the associated body structures fitting into each other and extending approximately vertically and coming into contact when joining and compressing, were conical in such a way that, when joining under pressure, an undetachable, fluid-tight press fit was produced.

2. A shock absorber piston (13) according to claim 1, characterised in that the first part (14) and the second part (15) were identical.

3. A shock absorber piston (13) according to claim 1 and 2, characterised in that, the structures in each of the two identical parts (14,15) producing the inner region of the passage (5) when joining consisted firstly of a semi-cylindrical skirt (16′) formed by a notional vertical cut through a cylindrical skirt, which semi-cylindrical skirt projects beyond the equatorial plane of the shock absorber piston (13), the height of which skirt, however, is smaller than half the thickness dimension of the shock absorber piston (13) and the smaller skirt surface area of which semi-cylindrical skirt extends along the radius (18) of the passage (5) which is for receiving the piston rod and the outer surface of which semi-cylindrical skirt terminates at such a distance in front of the zone of the channels for passage of fluid of both parts (14,15) to be joined that these have a sufficient mechanical stability, and consisted secondly of a recess (16˝) complementing the shape of the projecting semi-cylindrical skirt (16′), which recess was producible by rotating reflection of the projecting part (16′) of the semi-cylindrical skirt on the equatorial plane of the shock absorber piston as mirror plane and with the central longitudinal axis of the shock absorber piston as rotation axis, with an angle of rotation of 180°, said recess being arranged about the central longitudinal axis of the shock absorber piston.

4. A shock absorber piston (13) according to claim 1, characterised in that the first (19) and the second part (20) were not identical.

5. A shock absorber piston (13) according to claim 1 and 4, characterised in that the structure (21′) providing the internal region of the passage (5) for receiving the piston rod on joining was a cylindrical skirt (21′), which was located in the first part (19) projecting above the substantially flat side of this first part (19) lying within the joined shock absorber piston and extending round the vertical central line at a distance of half the diameter (22) of the passage (5) for receiving the piston rod, the height of which cylindrical skirt (21′) was less than the thickness dimension of the second part (20) at the location next to a recess (21˝) thereof which is indicated further in the following, and the outer surface area of which skirt terminated at such a distance from the zone of the channels (9) for passage of fluid in the first part (19) and the second part (20) that these have sufficient mechanical stability, and in that there was a recess (21˝) located in the second part (20) on the side lying inside the joined shock absorber piston (13), which recess complemented the cylindrical skirt-shaped projection (21′) of the first part (19).

6. A shock absorber piston (13) according to claim 1 to 5, characterised in that the complementary structures consisting of projections (16′, 21′) and recesses (16˝, 21˝), which, after joining and compression, produced the internal region of the passage (5) for receiving the piston rod, had, in axial plan view, a polygonal, preferably hexagonal or octagonal, outer boundary (27).

7. A shock absorber piston (13) according to the preamble of claim 1, characterised in that the shock absorber piston (13) is joined from two parts (23,24) which are disc-shaped to a close approximation and a cylindrical skirt shaped sleeve (25), with the sleeve (25) containing the region (26′, 26˝) of the passage (5) lying inside the shock absorber piston (13) and stipulated for receiving the piston rod, the internal diameter of the sleeve (25) having corresponded to the diameter of this passage, the outer diameter of the sleeve (25) having been dimensioned such that the outer surface area of the sleeve (25) terminated in the joined shock absorber piston (13) at a distance from the zone of the channels (9) of the first part (23) and of the second part (24) for passage of fluid, such that these parts have a sufficient stability, and the height of the sleeve (25) having been less than the thickness of the shock absorber piston (13) at the location of the annular chamber planes (12),
in that each of the two parts (23,24) which are disc-shaped to a close approximation, had, extending from the side thereof which had the annular chamber, an axial passage (17) for receiving the piston rod in the zones in which the internal contour of the sleeve (25) did not form the passage (5) for the piston rod and a recess (26′, 26˝) having adjoined this axial passage (17) and been dimensioned such that it could just receive the sleeve (25) when the three parts (23,24,25) were joined,
and in that the approximately vertically extending boundary surfaces of the sleeve (25) and of the recesses (26′, 26˝) which were to receive the sleeve (25), said surfaces coming into contact with each other when joining, were conical in such a manner that, on joining them under pressure, an undetachable, fluid-tight press fit was produced.

8. A shock absorber piston (13) according to claim 7, characterised in that the sleeve (25), in the axial plan view, had a polygonal, preferably hexagonal or octagonal outer boundary (27) and the recesses (26′, 26˝) receiving the sleeve (25) had a shape which complemented the shape of the sleeve (25).

9. A shock absorber piston (13) according to claims 1 to 8, characterised in that it consists of sintered metal.

## Revendications

1. Piston amortisseur réalisé à partir au moins de deux parties approximativement en forme de disques (2, 3) exclusivement par assemblage et pressage ensemble de ces parties ainsi assemblées, piston susceptible d'être monté sur une tige de piston et comportant un côté supérieur (2) et un côté inférieur (3) ainsi qu'une enveloppe de piston et qui a comme éléments fonctionnels essentiellement deux groupes, séparés par des parois intermédiaires, de canaux (9) de passage de liquide parcourus en sens inverse par celui-ci, et qui comporte respectivement sur son côté supérieur (2) et sur son côté inférieur (3) à une certaine distance de l'emplacement de la tige de piston, un épaulement annulaire périphérique (6) qui entoure une chambre annulaire (7) dont la limitation interne, vue en direction radiale, coïncide avec la limitation externe de l'alésage central axial (5) destiné à recevoir la tige de piston, piston dans le cas duquel, dans deux des parties (2, 3), avant l'assemblage et le pressage, les zones associées à ces parties des canaux (9) de passage du liquide, leurs orifices d'entrée (10) et ou de sortie (8), les épaulements annulaires (6) et les chambres annulaires (7) étaient déjà préformés, caractérisé en ce qu'avant l'assemblage et le pressage :
- dans une première partie (14, 19, 23) qui porte le côté plat supérieur ainsi que dans une deuxième partie (15, 20, 24) qui porte le côté inférieur du futur piston amortisseur (13), la zone de l'alésage (5) appartenant à ces parties (par exemple 14, 15) de l'alésage (5) destiné à recevoir la tige de piston était préformée de façon que
- dans la première partie (14, 19, 23) sur le côté de la chambre annulaire se trouvait un alésage de faible profondeur (17) du diamètre et de la position de l'alésage destiné à revoir la tige de piston que dans la seconde partie (15, 20, 24) se trouvait un tel alésage (17) ou bien un alésage (17′) d'une profondeur plus importante,
- les extrémités côté chambre annulaire de ces alésages affleuraient les plans (12) de la chambre annulaire,
- sur la première partie (14, 19, 23) et sur la deuxième partie (15, 20, 24) sur le côté opposé à la chambre annulaire correspondante (7) étaient disponibles des structures complémentaires les unes des autres qu'avec des saillies (16′, 21′) ou bien des creux (16˝, 21˝, 26′, 26˝) qui se raccordent directement à la zone des alésages courts (17) partant des plans (12) des chambres annulaires,
et en ce que ces saillies (16′, 21′) et ces creux (16˝, 21˝, 26′, 26˝) étaient réalisés de façon qu'à partir d'elles, lors de l'assemblage et du pressage de la première partie (14, 19, 23) et de la seconde partie (15, 20, 24), par interpénétration, la zone interne de l'alésage destiné à recevoir la tige de piston du piston amortisseur pouvait se former.
- et en ce que les surfaces de délimitation, s'étendant à peu près verticalement et venant en contact lors de l'assemblage et du pressage, des structures s'appareillant et s'ajustant les unes dans les autres étaient coniques de sorte que lors de l'assemblage sous pression, il en résultait un ajustage serré indissociable étanche au liquide.

2. Piston amortisseur (13) selon la revendication 1, caractérisé en ce que la première partie (14) et la seconde partie (15) étaient identiques.

3. Piston amortisseur (13) selon la revendication 1 et la revendication 2, caractérisé en ce que les structures dans chacune des deux parties identiques (14, 15) qui donnent lors de l'assemblage la zone interne de l'alésage (5) ont été constituées en premier lieu par une enveloppe demi-cylindrique (16′) formée par une coupe verticale supposée à travers une enveloppe cylindrique, et qui fais saillie au-dessus du plan d'équateur du piston amortisseur (13), mais dont la hauteur est inférieure à la demi-cote d'épaisseur du piston amortisseur (13) et dont la surface enveloppe la plus petite s'étend le long du rayon (18) de l'alésage (5) prévu pour recevoir la tige de piston tandis que sa surface enveloppe externe se termine à une distance telle avant la zone des canaux de passage du liquide des deux parties à assembler (14, 15) que celles-ci ont une stabilité mécanique suffisante, et en second lieu par un creux (16˝) complémentaire de la forme de l'enveloppe demi-cylindrique (16′) en saillie et agencé autour de l'axe longitudinal médian du piston amortisseur en étant susceptible d'être obtenu par réflexion rotative de la partie en saillie (16′), de l'enveloppe demi-cylindrique sur l'équateur du piston amortisseur jouant le rôle de plan réflecteur et de l'axe longitudinal médian du piston amortisseur jouant le rôle d'axe de rotation avec un angle de rotation de 180°.

4. Piston amortisseur (13) selon la revendication 1, caractérisé en ce que la première partie (19) et la seconde partie (20) étaient inégales.

5. Piston amortisseur (13) selon les revendications 1 et 4, caractérisé en ce que la structure (21′) donnant lors de l'assemblage la zone interne de l'alésage (5) destiné à recevoir la tige du piston, était une enveloppe cylindrique (21′) se trouvant sur la première partie (19), faisant saillie au-dessus du côté essentiellement plat de cette première partie (19) se trouvant à l'intérieur du piston amortisseur assemblé, et entourant l'axe médian vertical à une certaine distance du demi-diamètre (22) de l'alésage (5) destiné à recevoir la tige de piston, la hauteur de cette enveloppe cylindrique (21′) étant inférieure à la cote d'épaisseur de la seconde partie (20) à l'endroit voisin de celui du creux (21˝) décrit plus en détail ci-après, et dont la surface enveloppe externe se termine à une distance telle de la zone des canaux de passage du liquide (9) dans la première partie (19) dans la seconde partie (20), que celles-ci ont une stabilité mécanique suffisante, et en ce que dans la deuxième partie (20) sur le côté se trouvant à l'intérieur dans le piston amortisseur (13) assemblé, se trouvait un creux (21˝) qui était complémentaire de la saillie (21′) en forme d'enveloppe cylindrique de la première partie (19).

6. Piston amortisseur (13) selon l'une des revendications 1 à 5, caractérisé en ce que les structures complémentaires constituées par les saillies (16′, 21′) et les creux (16˝, 21˝) qui ont donné après l'assemblage et le pressage la zone interne de l'alésage (5) destiné à recevoir la tige du piston, ont, dans la vue de dessus axiale, une délimitation externe (27) polygonale, de préférence hexagonale ou bien octogonale.

7. Piston amortisseur (13) selon le préambule de la revendication 1, caractérisé en ce que
le piston amortisseur (13) est assemblé à partir de deux parties (23, 24) en première approximation sous forme de disque, et d'un manchon (25) en forme d'enveloppe cylindrique, tandis que le manchon (25) comprenait la zone (26′, 26˝) se trouvant dans le piston amortisseur (13) de l'alésage (5) prévu pour recevoir la tige de piston, le diamètre interne du manchon (25) correspondait à cet alésage, le diamètre externe du manchon (25) était dimensionné de façon que la surface enveloppe externe du manchon (25) dans le piston amortisseur (13) assemblé se terminait à une distance telle de la zone des canaux de passage du liquide (9) de la première partie (23) et la seconde partie (24), que celles-ci ont une stabilité suffisante et la hauteur du manchon (25) était inférieure à l'épaisseur du piston amortisseur (13) à l'emplacement des plans (12) de la chambre annulaire,
en ce que chacune des deux parties (23, 24), en première approximation en forme de disque, avait à partir de son côté portant la chambre annulaire, un alésage axial (17) destiné à recevoir la tige de piston dans les zones dans lesquelles le contour interne du manchon (25) ne formait pas l'alésage (5) pour la tige de piston, et cet alésage axial (17) se raccorde à l'évidement (26′, 26˝) qui était dimensionné de façon et qu'il pouvait exactement recevoir le manchon (25) lors de l'assemblage des trois parties (23, 24, 25).
et en ce que les surfaces de délimitation du manchon (25) et des évidements (26′, 26˝) recevant le manchon (25), ces surfaces s'étendant de façon approximativement verticale et venant en contact entre elles lors de l'assemblage, étaient coniques de sorte que lors de l'assemblage sous pression, il en résultait un ajustage serré indissociable et étanche au liquide.

8. Piston amortisseur (13) selon la revendication 7, caractérisé en ce que le manchon (25) en vue de dessus axial, avait une délimitation externe (27) polygonale, de préférence hexagonale ou octogonale, et les évidements (26′, 26˝) recevant ce manchon (25) avaient une forme complémentaire de la forme du manchon (25).

9. Piston amortisseur (13) selon les revendications 1 à 8, caractérisé en ce qu'il est constitué de métal fritté.
